# EUROPEAN PATENT APPLICATION

(11) **EP 2 323 030 A1**
(43) Date of publication of application: **18.05.2011**
(21) Application number: 09797972.8
(22) Date of filing: 16.07.2009
(51) Int. Cl.: G06F 3/16, G06F 3/048

(54) **CONTENT DISPLAY DEVICE, CONTENT DISPLAY METHOD, PROGRAM, AND RECORDING MEDIUM**

(30) Priority: 18.07.2008 JP 2008187777
(71) Applicant: Sharp Kabushiki Kaisha, Osaka-shi, Osaka 545-8522 (JP)
(72) Inventor: FURUKAWA, Hirofumi, Osaka-shi, Osaka 545-8522 (JP); KASHITO, Kiyotaka, Osaka-shi, Osaka 545-8522 (JP)
(74) Representative: Müller - Hoffmann & Partner
(86) International application number: PCT/JP2009/062898
(87) International publication number: WO 2010/008048

(57) **Abstract**

Provided are a content display device and a content display method each capable of reliably providing, even if a plurality of content items displayed on a single screen are to be read aloud consecutively, a user with voice reading each article, a program therefor, and a storage medium storing the program. A television (100) is a content display device capable of displaying a plurality of content items in a single screen and sequentially reading aloud by voice text strings relating to the respective content items. The television (100) includes a setting section (114) for setting the screen to have a display condition displaying a content item, among the content items, which has a text string relating to the content item and being currently read aloud in order to notify a user of the content item in such a manner that the content item is distinguishable from the other content item(s).

## Description

### Technical Field

The present invention relates to: a content display device for displaying content; and a method for displaying content. The present invention also relates to: a program for causing a computer to operate as the content display device; and a storage medium storing the program.

### Background Art

Content display devices for displaying content, for example, personal computers for displaying web pages, are now widely used. Further, television receivers (hereinafter, referred to as televisions) with which the Internet is available are also in wide use. Accordingly, there are increasing cases where content distributed via the Internet is displayed on a large display (e.g., a 37-inch liquid crystal display) and viewed thereon.

An example of the content expected to be displayed on such the large-screen television may be an electronic newspaper. A page of a paper newspaper has a horizontal width of approximately 40 cm, whereas a 37-inch display has a horizontal width of approximately 80 cm, which is double the horizontal width of the page of the paper newspaper. Therefore, if the page of the newspaper is displayed on the television as it is, an approximately 4-mm character printed on the page of the newspaper becomes approximately 8 mm in size when displayed on the display. Assume that the television has a horizontal-direction resolution of 1920 points. Then, the size of the character to be displayed on the television is approximately 19 points. Namely, with the television having a large screen of approximately 37 inch, even if text information included in the entire page of the newspaper is displayed at once, it is possible to display individual characters with a sufficient resolution.

Incidentally, a voice reading application used in such the content display device conventionally involves, for example, reading aloud a menu item and a text. For example, Patent Literature 1 discloses an electronic device (e.g., a mobile phone) including (i) a display device and (ii) a voice reading function.

The electronic device disclosed in Patent Literature 1 stores, for each display screen to be displayed on a display section, screen information indicative whether or not the display screen includes a text string or a descriptive text each of which can be synthesized into voice. Each time one display item on the display section is switched to another, corresponding screen information is referred to. Then, based on this, it is determined whether or not the current display screen includes a text string or a descriptive text each of which can be synthesized into voice and can be read aloud. If the current display screen includes such the text string or descriptive text, the display screen explicitly indicates that voice reading is available. On the other hand, if the current display screen does not include such the text string or descriptive text, the display screen does not indicate that voice reading is available.

Thus, with the above display condition of the electronic device described in Patent Literature 1, the user no longer needs to all the way perform operation such as pressing a key in order to check whether or not voice reading is available in the current display screen. This can reduce the burden of the user.

Further, this can avoid a user's misunderstanding that the electronic device has a "malfunction" when voice reading is not performed, for example. This provides an advantage of enhancing user-friendliness.

### Citation List

### [Patent Literature]

### [Patent Literature 1]

Japanese Patent Application Publication, Tokukai, No. 2006-128906 A (Publication Date: May 18, 2006)

### Summary of Invention

### Technical Problem

Incidentally, for example, in order to display a page of the above-described electronic newspaper as it is, typically, a plurality of articles in the page are arranged in a single screen.

In such a case, if the content of the articles arranged in the single screen is read aloud in a manner as in the electronic device disclosed in Patent Literature 1, the following problems occur:

For example, assume that a displayed page of the newspaper is set to be switched from one to another at a point when a predetermined, fixed time period has elapsed. With this setting, it is not always possible to finish reading aloud all articles in a page within that time period. This may lead to such a case where, before the user finishes listening to voice reading all the articles, the page is switched to a next page.

Now, focus on each article. Assume that, for all articles, a uniform reading period is set within which reading-aloud of any article can be surely completed. With this setting, in a case where a short article is read aloud, there occurs a long time period in which no sound is reproduced. In such a case, it is difficult for the user to determine whether or not the electronic newspaper system is normally operating.

Furthermore, it is unclear for the user which of the plurality of displayed articles is currently read aloud. Thus, the user must search for the article in the page, according to the sound information that the user is listening to. This is troublesome for the user.

In view of the foregoing problems, an object of the present invention is to provide: a content display device and a content display method each of which is capable of reliably provide, even in a case where a plurality of articles (content items) displayed on a single screen are to be read aloud consecutively, a user with voice reading each article; a program therefor; and a storage medium storing the program.

### Solution to Problem

In order to attain the foregoing object, a content display device of the present invention is a content display device capable of (i) displaying a plurality of content items in a single screen and (ii) sequentially reading aloud by voice text strings relating to the respective plurality of content items, including: display means for causing the plurality of content items to be displayed in the single screen; and setting means for setting, in order to notify a user of a content item, among the plurality of content items, which has a text string relating to the content item and being currently read aloud, the screen displayed by the display means so that the screen has a display condition in which the content item which has the text string relating to the content item and being currently read aloud is distinguishable from a content item, among the plurality of content items, which is not the content item which has the text string relating to the content item and being currently read aloud.

According to the above content display device, among the plurality of content items displayed on the screen, a content item having a text string relating to the content item is notified to the user while the text string of the content item is read aloud, the notification being performed in such a manner that the content item is distinguishable from the other content item(s). This allows the user to easily identify the content item which is currently read aloud. Thus, it is possible to reliably provide the user with data corresponding to voice reading an article.

The above content display device may be realized by a computer. In this case, the present invention also encompasses: a program for causing a computer to operate each means described above so as to realize the content display device by the computer; and a computer readable storage medium storing the program.

A method of the present invention for displaying content is a method for displaying content, said method being capable of (i) displaying a plurality of content items in a single screen and (ii) sequentially reading aloud by voice text strings relating to the respective plurality of content items, said method including the steps of: (i) causing the plurality of content items to be displayed in the single screen; and (ii) setting, in order to notify a user of a content item, among the plurality of content items, which has a text string relating to the content item and being currently read aloud, the screen displayed in the step (i) so that the screen has a display condition in which the content item which has the text string relating to the content item and being currently read aloud is distinguishable from a content item, among the plurality of content items, which is not the content item which has the text string relating to the content item and being currently read aloud.

According to the above method for displaying content, among the plurality of content items displayed on the screen, a content item having a text string relating to the content item is notified to the user while the text string of the content item is read aloud, the notification being performed in such a manner that the content item is distinguishable from the other content item(s). This allows the user to easily identify the content item which is currently read aloud. Thus, it is possible to reliably provide the user with data corresponding to voice reading an article.

### Advantageous Effects of Invention

As described above, the content display device of the present invention includes: display means for causing the plurality of content items to be displayed in the single screen; and setting means for setting, in order to notify a user of a content item, among the plurality of content items, which has a text string relating to the content item and being currently read aloud, the screen displayed by the display means so that the screen has a display condition in which the content item which has the text string relating to the content item and being currently read aloud is distinguishable from a content item, among the plurality of content items, which is not the content item which has the text string relating to the content item and being currently read aloud.

Therefore, even in a case where a plurality of articles (content items) displayed on a single screen are to be read aloud consecutively, it is possible to reliably provide a user with voice reading each article.

### Brief Description of Drawings

Fig. 1

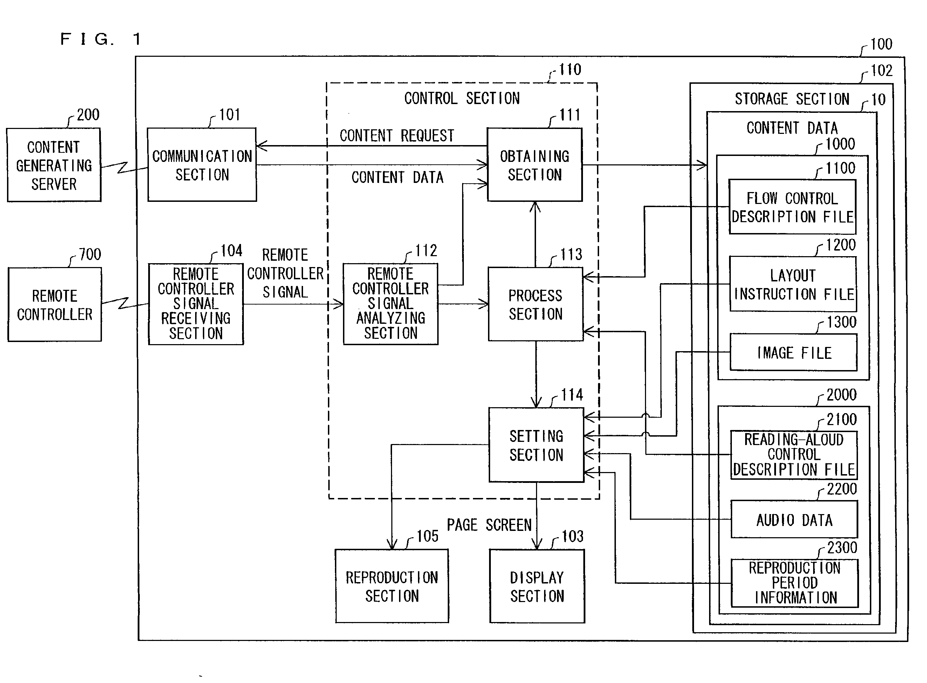

   Fig. 1, related to an embodiment of the present invention, is a block diagram illustrating a configuration of a main part of a television, which serves as a client of an electronic newspaper distribution system.
Fig. 2

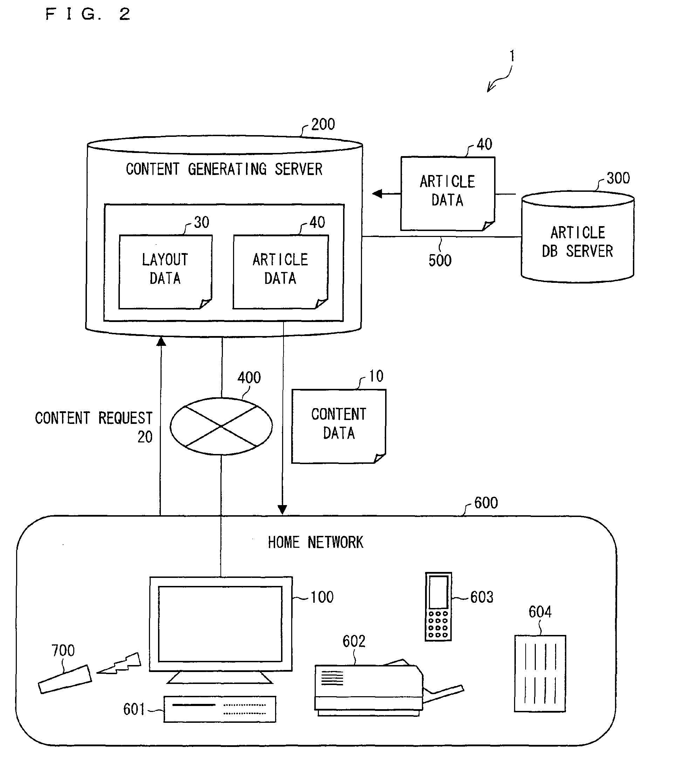

   Fig. 2, related to the embodiment of the present invention, is a block diagram illustrating a configuration of the electronic newspaper distribution system.
Fig. 3

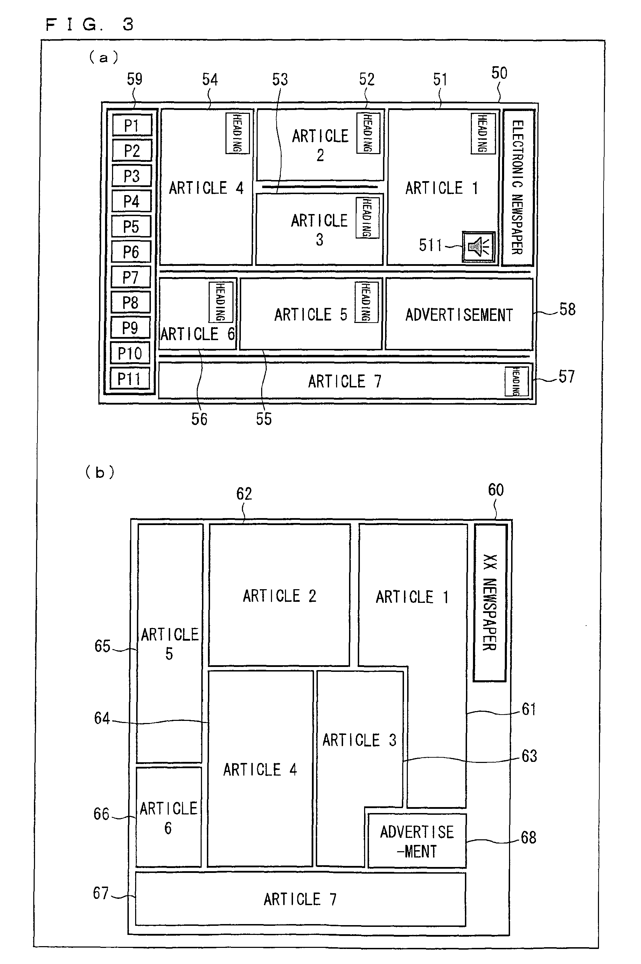

   Fig. 3, related to the embodiment of the present invention, is a view exemplifying a configuration of a page screen reproduced based on page content data.
Fig. 4

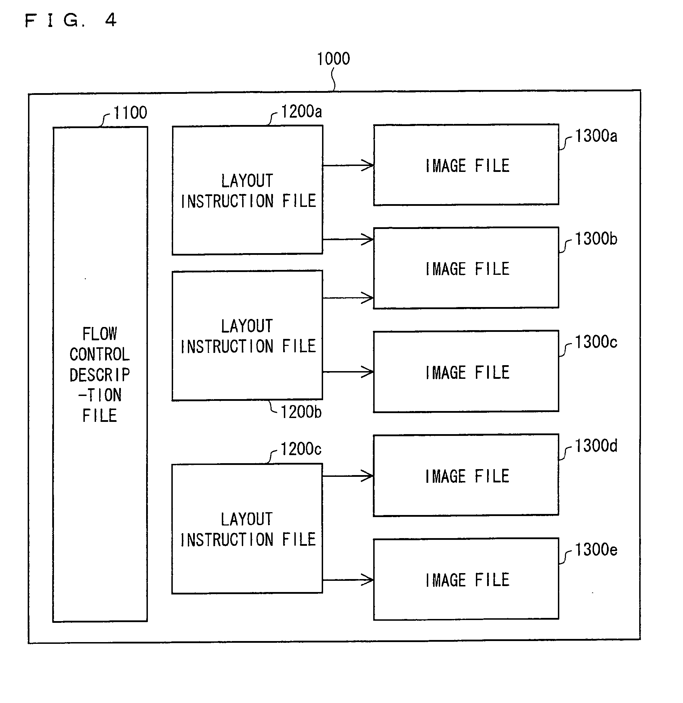

   Fig. 4, related to the embodiment of the present invention, is a view schematically illustrating a data configuration of page content data that the television can reproduce.
Fig. 5

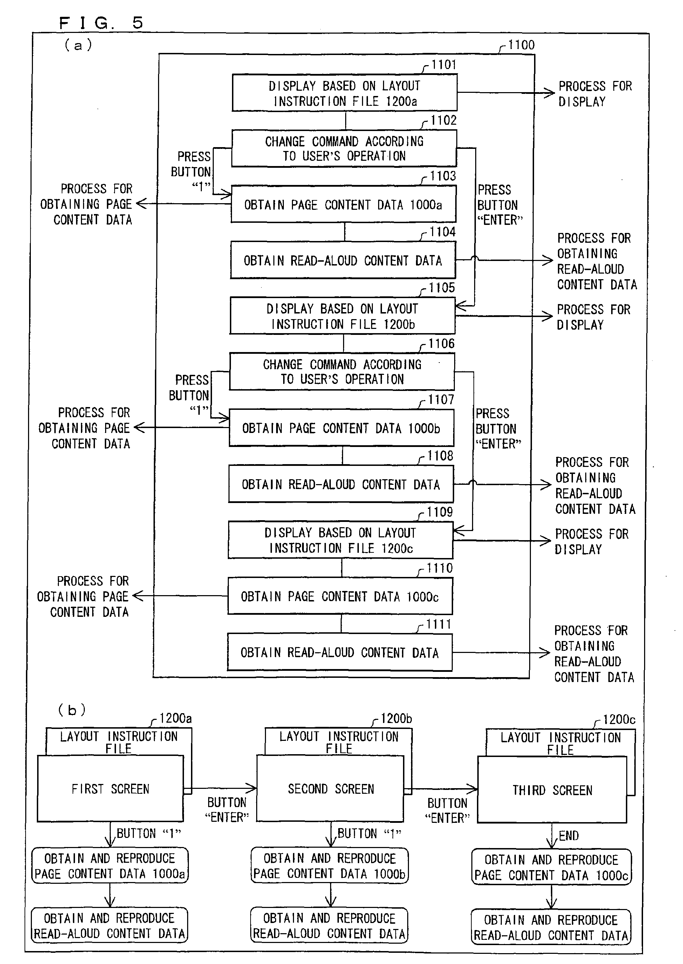

   Fig. 5, related to the embodiment of the present invention, is a view schematically illustrating a flow control description file included in the page content data shown in Fig. 4.
Fig. 6

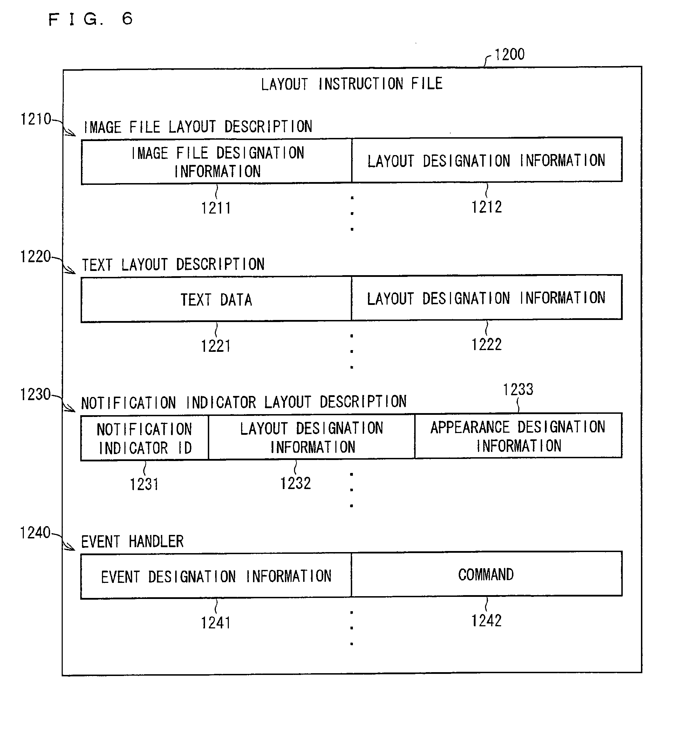

   Fig. 6, related to the embodiment of the present invention, is a view schematically illustrating a layout instruction file included in the page content data shown in Fig. 4.
Fig. 7

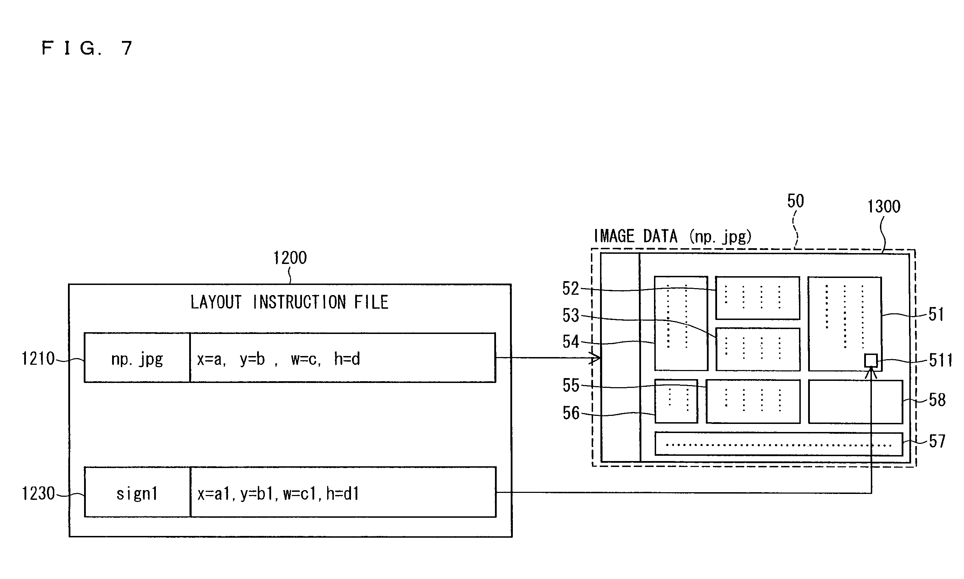

   Fig. 7, related to the embodiment of the present invention, is a view schematically illustrating a concrete example of the layout instruction file included in the page content data which is to be reproduced by the television.
Fig. 8

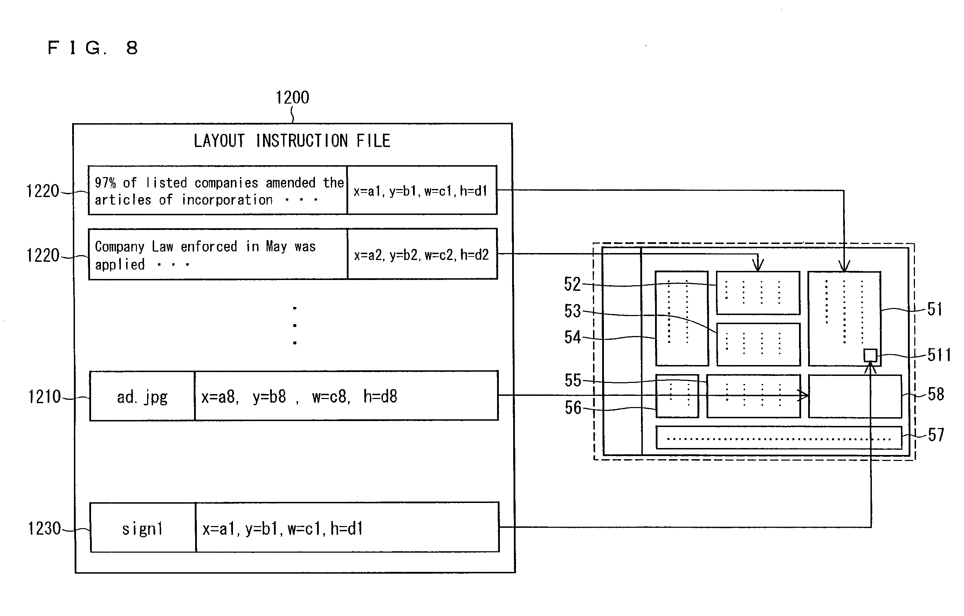

   Fig. 8, related to the embodiment of the present invention, is a view schematically illustration another concrete example of the layout instruction file included in the page content data which is to be reproduced by the television.
Fig. 9

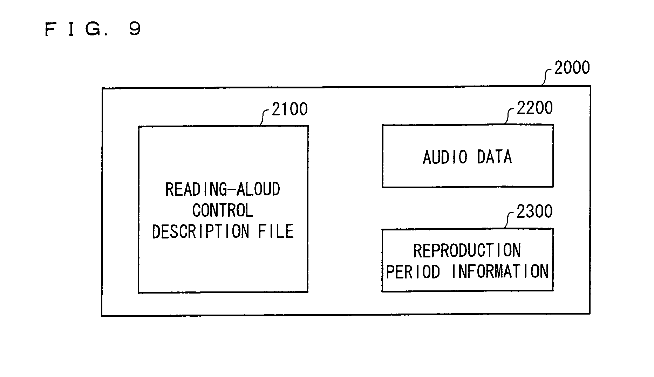

   Fig. 9, related to the embodiment of the present invention, is a view schematically illustrating a data configuration of read-aloud content data that the television can reproduce.
Fig. 10

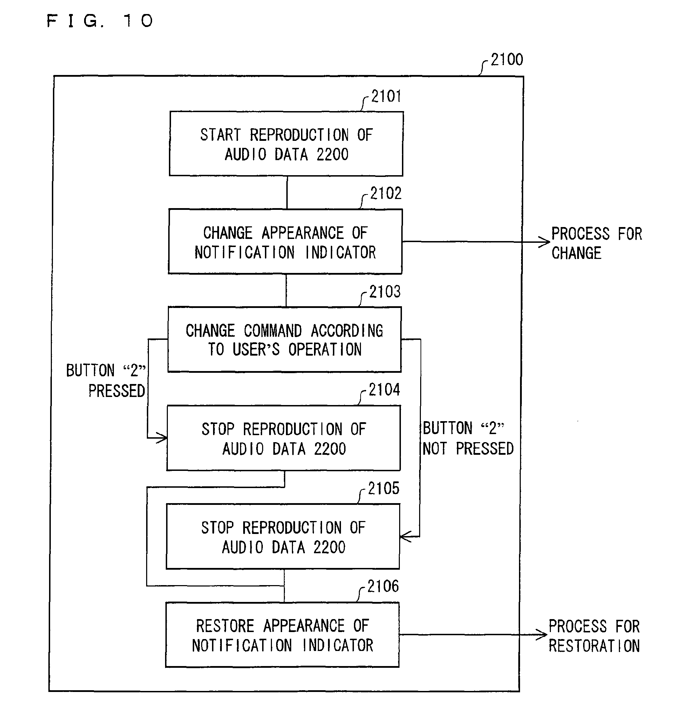

   Fig. 10, related to the embodiment of the present invention, is a view schematically illustrating a reading-aloud control description file included in the read-aloud content data shown in Fig. 9.
Fig. 11

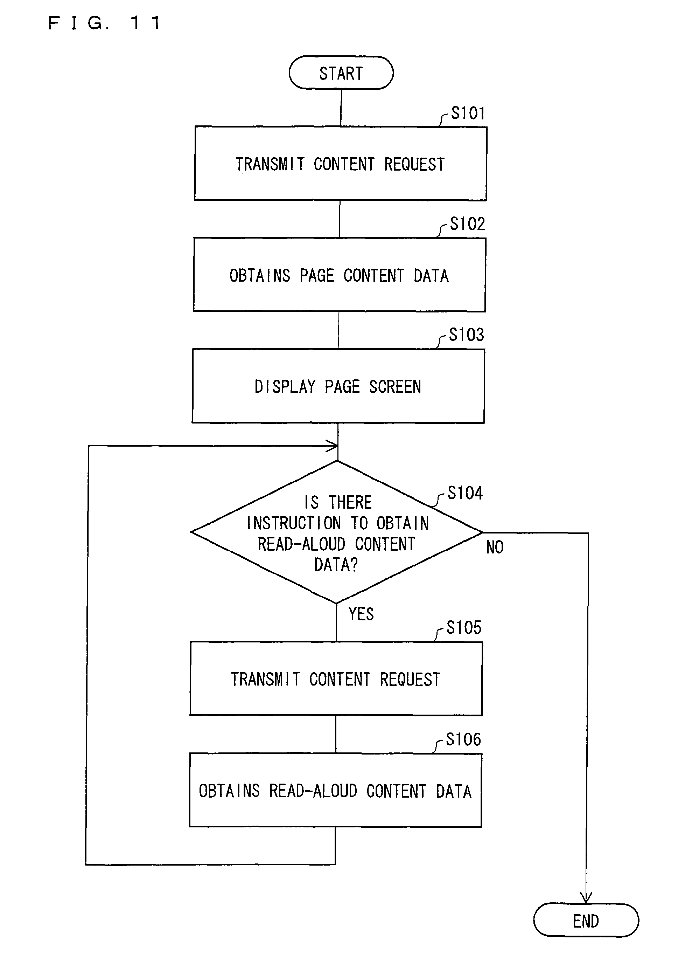

   Fig. 11, related to the embodiment of the present invention, is a flow chart illustrating how content data is obtained.
Fig. 12

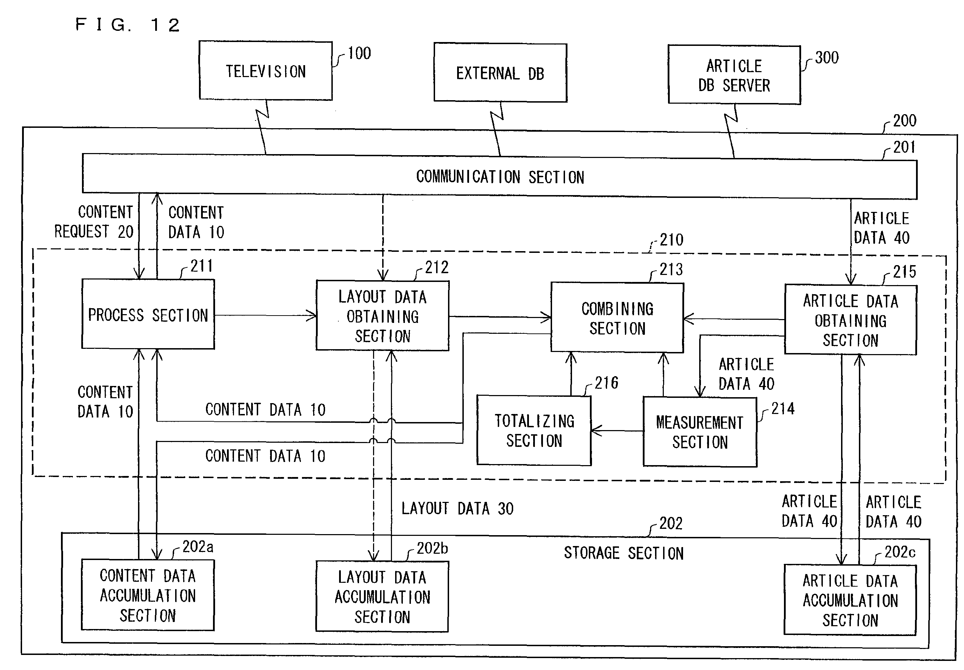

   Fig. 12, related to the embodiment of the present invention, is a block diagram illustrating a configuration of a main part of a page content generating server, which serves as a server of the electronic newspaper distribution system.

### Description of Embodiments

The following will describe one embodiment of the present invention applied to a television which displays an electronic newspaper. Namely, a content display device of the present embodiment is realized as a television for displaying, on its display, a page screen in which a content item such as an article and/or an advertisement is displayed. Therefore, hereinafter, the content display device is simply referred to as a television.

However, note that the content display device of the present invention is not limited to the television, and the content item displayed by the content display device of the present invention is not limited to the electronic newspaper. Namely, the present invention is applicable to any content display device which displays a plurality of content items on a single screen, regardless of the kind of the content item to be displayed. Particularly, the present invention is suitably applicable to a content display device which displays content items (e.g., content items in a magazine, a flyer, a pamphlet, or a hanging advertising poster) in such a manner as to reproduce an actual layout thereof.

Further, in the below-described embodiment, the television serves as a client device of an electronic newspaper distribution system. Of course, the content display device of the present invention is not limited to this. Instead, for example, the content display device of the present invention can be realized as a stand-alone content display device.

Further, in the present embodiment, a content data providing device, which provides content data to the content display device, is realized as a content generating server, which provides content data used to display the electronic newspaper on the television.

### (A. Electronic Newspaper Distribution System)

The following will describe an electronic newspaper distribution system 1 of one embodiment of the present invention, with reference to Figs. 2 and 3.

Fig. 2 is a block diagram illustrating a system configuration of the electronic newspaper distribution system (content data distribution system) 1. The electronic newspaper distribution system 1 is a system for realizing an electronic newspaper distributing service by a client-server method. As shown in Fig. 2, the electronic newspaper distribution system 1 includes a television (content display device) 100, a content generating server (content data providing device) 200, and an article database server (hereinafter, abbreviated as an "article DB server") 300.

The content generating server 200 is a server device for providing the electronic newspaper distributing service, and provides content data 10 to a client device of the electronic newspaper distributing service. The television 100 is one client device of the electronic newspaper distributing service. The television 100 reproduces the content data 10 obtained from the content generating server 200, so as to display a page screen 50 in which a corresponding page of the newspaper is reproduced.

The content generating server 200 is provided in an office of an enterprise which provides the electronic newspaper distributing service, for example. The television 100 is a television receiver including software for reproducing the content data 10, and is provided in a user's house, for example. The content generating server 200 and the television 100 are connected with each other in such a manner that the content generating server 200 and the television 100 can communicate with each other over a communication network, specifically, over the Internet 400.

As shown in Fig. 2, the television 100 transmits a content request 20 to the content generating server 200. Upon receiving the content request 20, the content generating server 200 generates content data 10 for the received content request 20, and transmits the generated content data 10 to the television 100. The television 100 reproduces the content data 10 obtained from the content generating server 200.

In Fig. 2, illustrated as the client device of the electronic newspaper distribution system 1 is only the television 100. However, the content generating server 200 can also provide the content data 10 to another client device (not illustrated) which is connected with the content generating server 200 via the Internet 400 as well as the television 100.

Further, in Fig. 2, the content generating server 200 is configured so as to provide the content data 10 to the television 100 via the Internet 400. Instead, of course, the content generating server 200 may be configured so as to provide the content data 10 to a client device which is connected with the content generating server 200 via the other communications network, e.g., an intranet, extranet, LAN, ISDN, VAN, CATV communications network, virtual dedicated network (virtual private network), telephone line network, mobile communications network, or satellite communications network.

Further, in Fig. 2, the content data 10 is provided from the content generating server 200 to the client device (television 100) in response to the request for obtaining the content data 10, which request is given by the client. Conversely, the content data 10 may be distributed by the content generating server 200 spontaneously at an appropriate timing. In this case, distribution means by which the content generating server 200 distributes the content data 10 may be an e-mail.
(a) of Fig. 3 is a view schematically illustrating an example of a configuration of the page screen 50 that the television 100 displays based on the content data 10, whereas (b) of Fig. 3 is a view schematically illustrating an actual newspaper page 60 which has been typeset. The page screen 50, displayed on the television 100, is configured to include articles 51 through 57, which correspond to respective articles 61 through 67 on the actual newspaper page 60 in a one-to-one relationship. In the page screen 50, the articles 51 through 57 are arranged in such a manner as to reproduce the newspaper page 60 which has been typeset.

More specifically, the page screen 50 is horizontally divided into three sections. In the three sections, a plurality of quadrangular regions are provided, to which quadrangular regions the respective articles 51 through 57 are allocated. Here, which of the articles is allocated to which of the quadrangular regions is determined in consideration of the actual newspaper page 60.

In Fig. 3, each of the regions to which the respective articles 51 through 57 are allocated is shown as being shaped in a quadrangle. Of course, the present embodiment is not limited to this. For example, each of these regions may be shaped in a polygon.

Furthermore, the page screen 50 also displays an advertisement 58, which corresponds to an advertisement 68 on the newspaper page 60. This makes an impression that the user derives from the page screen 50 more similar to that from the actual newspaper page 60.

In addition, the page screen 50 has a left edge section including, e.g., page switching buttons 59. Through use of the page switching buttons 59, the user can manually switch the page screen 50 to another page screen.

Further, of the articles 51 through 57 displayed on the page screen 50, the article 51 has audio data corresponding to voice reading the content of the article 51. Furthermore, in a quadrangular region for the article 51, there provided a notification indicator 511. The notification indicator 511 notifies, when the audio data of the article 51 is reproduced, the user that the reproduction of the audio data is executed. The audio data of the article 51 is included in the content data 10 distributed by the content generating server 200.

Note that the audio data is not limited to the one corresponding to voice reading a text string included in the article 51. Instead, for example, the audio data may be the one corresponding to voice reading a text string other than the text string included in the article 51. In short, the audio data only needs to be the one corresponding to voice reading a text string relating to the content of the article 51. For example, in a case of an article about a news item on an incident, audio data of the article may be the one corresponding to voice reading a text string included in a manuscript about the incident, which manuscript has read by an announcer in a radio news program or the like.

When the audio data of the article 51 is started to be reproduced, the notification indicator 511 notifies the user of the reproduction. For example, when the audio data of the article 51 is started to be reproduced, an appearance of the notification indicator 511 changes. Here, the appearance refers to a figure and/or a condition (display condition) that the user can see. For example, the appearance of the notification indicator 511 can be a shape, a pattern, a color, and/or a size of the notification indicator 511. The change in the appearance of the notification indicator 511 is maintained until the reproduction of the audio data ends. When the reproduction ends, the appearance of the notification indicator 511 is restored to the appearance that the notification indicator 511 had before the reproduction.

Instead of the notification indicator 511, the reproduction of the audio data of the article 51 may be notified to the user by (i) a change in a pattern, a color, and/or the like of the background of the quadrangle for the article 51 and/or (ii) a change in a characteristic (e.g., a font) of characters which express the content of the article 51. Alternatively, for example, a color of an outline surrounding a region for the article 51 may be changed.

In short, the notification means only needs to allow, while the audio data of the article 51 is reproduced, the user to distinguish the article 51, whose audio data is currently reproduced, from the other articles (i.e., the articles 52 through 57). With such the notification means associated with the article 51, the user can easily recognize that the audio data of the article 51 is currently reproduced.

In a case where there exist a plurality of articles having corresponding audio data, use of the page switching buttons 59, for example, allows the user to stop reproduction of audio data of an article which is currently reproduced, and to switch to reproduction of audio data of another article.

Needless to say, in the case where there exist the plurality of articles having the corresponding audio data, (i) the notification indicator as described above or (ii) notification means alternative to the notification indicator is set for each of the articles having the corresponding audio data.

Note that the configuration of the page screen 50, which is displayed as a result of reproduction of the content data 10, is not limited to the one shown in (a) of Fig. 3. Namely, the page screen 50 may be configured by allocating the articles 51 through 57 to a respective plurality of polygonal regions, in completely the same layout as in the actual newspaper page 60. However, note that allocating the articles 51 through 57 to the respective quadrangular regions as in (a) of Fig. 3 makes a process for generating the content data 10 easier, which process is performed by the content generating server 200.

Meanwhile, in the case where the page screen 50 is configured in completely the same layout as in the actual newspaper page 60, an aspect ratio of the page screen 50 is not equal to that of the television 100; therefore, it is necessary to scroll the page screen 50 in a vertical direction (if the page screen 50 is displayed so that a horizontal width of the page screen 50 coincides with that of the television 100), or there occurs a space not displaying any part of the page screen 50 (if the page screen 50 is displayed so that a vertical width of the page screen 50 coincides with that of the television 100). This makes it possible to give the user the same impression as that given by the actual newspaper page 60.

As shown in Fig. 2, the content generating server 200 generates the content data 10 for the content request 20, based on layout data 30 which is stored in the content generating server 200 in advance. The layout data 30 is a template, based on which the content data 10 is configured. The content generating server 200 combines the layout data 30 with article data 40 which is obtained from the article DB server 300, in order to generate the content data 10. The television 100 uses the content data 10 to display the page screen 50, as shown in (a) of Fig. 3, for example. Further, the television 100 reproduces the audio data of the article 51 being on the page screen 50.

The article DB server 300 is a server device including a database for accumulating and managing articles on a newspaper. Further, the article DB server 300 provides, to the content generating server 200, the article data 40 expressing the articles 51 through 57 on the page screen 50 (see Fig. 3). The article DB server 300 may individually provide, to the content generating server 200, a plurality of pieces of article data 40 corresponding to the respective articles 51 through 57, or may collectively provide, to the content generating server 200, a single piece of the article data 40 including all the articles 51 through 57. In either case, the article data 40 includes, for each of the articles 51 through 57, various kinds of information such as a heading, a body text, a priority, a genre, and created date and time each of which is of the article. Further, the article data 40 may include still image data such as a photo and/or moving image data.

For example, assume that, of the articles 51 through 57, the article 51 has audio data corresponding to voice reading the article 51. In this case, the audio data may be included in the article data 40. If the audio data is not included in the article data 40, the content generating server 200 may generate, from a corresponding body text included in the article data 40, audio data corresponding to voice reading the article 51.

The article DB server 300 is provided in an office of a newspaper publisher, for example. The article DB server 300 is connected with the content generating server 200 in such a manner that the article DB server 300 and the content generating server 200 can communicate with each other via a dedicated line 500. The article data 40 is transferred from the article DB server 300 to the content generating server 200 via the dedicated line 500. Note that a method of how the article data 40 is transferred is not limited to this. Instead, the article data 40 may be transferred via the Internet 400. In this case, the article DB server 300 and the content generating server 200 are connected with each other via the Internet 400.

Note that the article DB server 300 may provide the article data 40 to the content generating server 200 in response to a request from the content generating server 200. Instead, the article DB server 300 may provide (push) the article data 40 to the content generating server 200 in response to registration of a new newspaper article into the database.

The content generating server 200 may generate the content data 10 at a point when the content generating server 200 receives the article data 40 supplied from the article DB server 300. Instead, upon receiving the article data 40 supplied from the article DB server 300, the content generating server 200 may once store the article data 40 therein, and may generate the content data 10 at a point when the content generating server 200 receives the content request 20.

As shown in Fig. 2, the television 100 is incorporated into a home network 600 provided in the user's house. Accordingly, the television 100 can perform data communication with another device included in the home network 600. The data communication in the home network 600 can be realized by using, e.g., a high-speed infrared data communication protocol such as IrSimple or a near field communication protocol such as Bluetooth (Registered Trademark).

Fig. 2 exemplifies, as devices included in the home network 600, a HDD recorder 601, a printer 602, a mobile phone 603, and an electronic paper 604, in addition to the television 100. The television 100 can transfer the content data 10 obtained from the content generating server 200, to the HDD recorder 601, the printer 602, the mobile phone 603, or the electronic paper 604. Further, the television 100 can obtain the content data 10 stored in the HDD recorder 601.

If an e-mail address of the mobile phone 603 is registered in the television 100 in advance, the television 100 may transfer the content data 10 to the mobile phone 603 via an e-mail. Alternatively, if the e-mail address of the mobile phone 603 is registered in the content generating server 200, the television 100 may inquire of the content generating server 200 for the e-mail address of the mobile phone 603, and may transfer the content data 10 to the e-mail address, which has been obtained from the content generating server 200. Further alternatively, if the e-mail address of the mobile phone 603 is registered in the content generating server 200, the content generating server 200 may directly transmit the content data 10 to the mobile phone 603 according to an instruction from the television 100.

Use of these devices included in the home network 600 allows the user to view the electronic newspaper by a wider variety of methods.

For example, by setting the HDD recorder 601 so that the HDD recorder 601 obtains content data 10 from the content generating server 200 at a certain time everyday, the television 100 can obtain, from the HDD recorder 601, content data 10 of today which is stored in the HDD recorder, and can reproduce the content data 10 thus obtained. Furthermore, by setting the HDD recorder 601 so that the HDD recorder 601 accumulates content data 10 obtained from the content generating server 200 everyday, the television 100 can obtain, from the HDD recorder 601, content data 10 of a past day, and can reproduce the content data 10 thus obtained.

Alternatively, the television 100 itself may include a storage device such as a hard disc drive, so that the television 100 can realize the above function without use of the HDD recorder 601. Further alternatively, the HDD recorder 601 or the television 100 may obtain, from the content generating server 200, the content data 10 which is push-distributed through use of distribution means such as an e-mail.

In addition, use of these devices included in the home network 600 allows the user to view the electronic newspaper in a place outside his/her house.

For example, by causing the content data 10 to be transferred from the television 100 to the printer 602, the user can print out the electronic newspaper with the printer 602 and bring the copy to a place outside his/her house. Further, by causing the content data 10 to be transferred from the television 100 to the mobile phone 603 or the electronic paper 604, the user can reproduce, in a place outside his/her house, the content data 10 stored in the mobile phone 603 or the electronic paper 604.

Furthermore, assume a case where the television 100 and the mobile phone 603 are registered with the same electronic newspaper distributing service with the same ID. In this case, when the user selects a certain article at the television 100, the television 100 may notify the content generating server 200 of the selection, and the content generating server 200 may distribute, to the mobile phone 603 which is registered with the same ID as the television 100, an article designated by the selection. In this case, an e-mail may be used as means for distributing the article.

### (B. Content Data)

The following will describe the content data 10 which is to be reproduced by the television 100 (see Fig. 2).

As described previously, the television 100 uses the content data 10 to display a corresponding page screen of the electronic newspaper and to reproduce audio data corresponding to an article on the page screen. In order to realize this, the content data 10 includes (i) page content data, which is used to display the page screen of the electronic newspaper, and (ii) read-aloud content data, which is used to reproduce the audio data corresponding to voice reading the content of the article on the page screen. Each of the page content data and the read-aloud content data will be described in order below:

First, the page content data will be described. The television 100 is configured so as to be capable of reproducing page content data 1000 having the below-described data configuration. The page content data 1000 which is to be reproduced by the television 100 stores various kinds of information included in the electronic newspaper.

Fig. 4 is a view schematically illustrating a data configuration of the page content data 1000 that the television 100 can reproduce. As shown in Fig. 4, the page content data 1000 includes a flow control description file 1100, a layout instruction file 1200 (1200a, 1200b, 1200c), and an image file 1300 (1300a, 1300b, 1300c, 1300d, 1300e).

The flow control description file 1100 is a file defining a process to be executed by the television 100 during reproduction of the page content data 1000. The layout instruction file 1200 is a file defining an arrangement of a screen to be displayed by the television 100 during reproduction of the page content data 1000. The image file 1300 is a file including, in a predetermined format, information such as (i) a still image, a moving image, and/or a text each of which is depicted on the screen being to be displayed by the television 100 during reproduction of the page content data 1000 or (ii) audio being to be outputted by the television 100 during reproduction of the page content data 1000.

Note that the page content data 1000 can store a plurality of different layout instruction files. In the example shown in Fig. 4, the page content data 1000 stores three different layout instruction files 1200a, 1200b, and 1200c.

Further, the page content data 1000 can store a plurality of different image files. In the example shown in Fig. 4, the page content data 1000 stores five different image files 1300a, 1300b, 1300c, 1300d, and 1300e.

Next, the following will describe the flow control description file 1100 included in the page content data 1000.
(a) of Fig. 5 is a view schematically illustrating a typical example of a description in the flow control description file 1100. (b) of Fig. 5 is a view illustrating how a screen displayed by the television 100 is switched from one to another based on the flow control description file 1100 exemplified in (a) of Fig. 5.

The flow control description file 1100 includes a listing of (i) command statements defining respective commands to be given to the television 100 and (ii) control statements controlling an order in which command statements are to be executed. Particularly, the flow control description file 1100 exemplified in (a) of Fig. 5 includes the following command statements and control statements listed in the following order:
(1) A command statement 1101 for instructing to display a first screen being based on the layout instruction file 1200a.
(2) A control statement 1102 for determining, as a command statement to be executed next, (i) a command statement 1103 if, e.g., a button "1" on a remote controller is pressed or (ii) a command statement 1104 if, e.g., a button "enter" on the remote controller is pressed.
(3) A command statement 1103 for instructing to obtain a page content data 1000a, which is different from the page content data 1000.
(4) A command statement 1104 for instructing to obtain read-aloud content data which is available while the page content data 1000a is reproduced.
(5) A command statement 1105 for instructing to display a second screen being based on the layout instruction file 1200b.
(6) A control statement 1106 for determining, as a command statement to be executed next, (i) a command statement 1107 if the button "1" on the remote controller is pressed or (ii) a command statement 1109 if the button "enter" on the remote controller is pressed.
(7) A command statement 1107 for instructing to obtain a page content data 1000b, which is different from the page content data 1000.
(8) A command statement 1108 for instructing to obtain read-aloud content data which is available while the page content data 1000b is reproduced.
(9) A command statement 1109 for instructing to display a third screen being based on the layout instruction file 1200c.
(10) A command statement 1110 for instructing to obtain a page content data 1000c, which is different from the page content data 1000.
(11) A command statement 1111 for instructing to obtain read-aloud content data which is available while the page content data 1000c is reproduced.

According to the flow control description file 1100 exemplified in (a) of Fig. 5, the television 100 operates as shown in (b) of Fig. 5.

When the page content data 1000 is started to be reproduced, the television 100 displays the first screen being based on the layout instruction file 1200a, according to the command statement 1101, which is the first statement in the flow control description file 1100.

If the button "1" on the remote controller is pressed while the first screen is displayed, the television 100 obtains the page content data 1000a according to the command statement 1103. Upon completion of the obtaining, the television 100 starts reproducing the page content data 1000a thus obtained.

Then, according to the command statement 1104, the television 100 sequentially obtains read-aloud content data which are available while the page content data 1000a is reproduced. Upon completion of the obtaining, the television 100 starts sequentially reproducing the read-aloud content data thus obtained, i.e., executes reading sequentially.

On the other hand, if the button "enter" on the remote controller is pressed while the first screen is displayed, the television 100 switches the first screen to the second screen being based on the layout instruction file 1200b, according to the command statement 1105.

If the button "1" on the remote controller is pressed while the second screen is displayed, the television 100 obtains the page content data 1000b according to the command statement 1107. Upon completion of the obtaining, the television 100 starts reproducing the page content data 1000a thus obtained.

Then, according to the command statement 1108, the television 100 sequentially obtains read-aloud content data which are available while the page content data 1000b is reproduced. Upon completion of the obtaining, the television 100 starts reproducing sequentially the read-aloud content data thus obtained, i.e., executes reading sequentially.

On the other hand, if the button "enter" on the remote controller is pressed while the second screen is displayed, the television 100 switches the second screen to the third screen being based on the layout instruction file 1200c, according to the command statement 1109.

When the display of the third screen ends, the television 100 obtains the page content data 1000c according to the command statement 1110. Upon completion of the obtaining, the television 100 starts reproducing the page content data 1000c thus obtained.

Then, according to the command statement 1111, the television 100 sequentially obtains read-aloud content data which are available while the page content data 1000c is reproduced. Upon completion of the obtaining, the television 100 starts sequentially reproducing the read-aloud content data thus obtained, i.e., executes reading sequentially.

In the present embodiment, the screens are switched as follows according to user's operation with respect to the remote controller: the first screen → the second screen → the third screen. However, the present invention is not limited to this.

For example, the present invention is also applicable to a conventional system (e.g., a slide-show system) which automatically switches the screens as follows: the first screen → the second screen → the third screen. In this case, the page content data 1000a for the first screen is first obtained and reproduced, and corresponding read-aloud content data are sequentially obtained and reproduced. Next, the page content data 1000b for the second screen is obtained and reproduced, and corresponding read-aloud content data are sequentially obtained and reproduced. Subsequently, the page content data 1000c for the third screen is obtained and reproduced, and corresponding read-aloud content data are sequentially obtained and reproduced.

Next, the following will describe the layout instruction file 1200 of the page content data 1000.

Fig. 6 is a view schematically illustrating a configuration of the layout instruction file 1200. As shown in Fig. 6, the layout instruction file 1200 includes an image file layout description 1210, a text layout description 1220, a notification indicator layout description 1230, and an event handler 1240.

The image file layout description 1210 is a description for depicting the image file 1300 in a screen which is arranged based on the layout instruction file 1200. The image file layout description 1210 includes (i) image file designation information 1211 designating the image file 1300 being to be depicted and (ii) layout designation information 1212 designating, in the screen, a place in which the image file 1300 designated by the image file designation information 1211 is to be placed.

The image file designation information 1211 may be, for example, a file name of the image file 1300 being to be depicted. The layout designation information 1212 may be, for example, four numerical values representing (i) an x-coordinate and a y-coordinate of an upper left apex of a quadrangular region in which the image file 1300 being to be depicted is depicted and (ii) a horizontal width and a vertical width of the quadrangular region.

Note that the layout instruction file 1200 can include a plurality of different image file layout descriptions 1210, and the television 100 can display a plurality of different image files 1300 on the screen which is arranged based on the layout instruction file 1200. If it is not necessary to display any image file 1300 on the screen, the layout instruction file 1200 may not include any image file layout description 1210.

The text layout description 1220 is a description for depicting a text on the screen which is arranged based on the layout instruction file 1200. The text layout description 1220 includes (i) text data 1221 expressing a text being to be depicted and (ii) layout designation information 1222 designating, in the screen, a place in which the text being to be depicted is to be placed.

The layout designation information 1222 may be, for example, four numerical values representing (i) an x-coordinate and a y-coordinate of an upper left apex of a quadrangular region to which the text data 1221 is allocated and (ii) a horizontal width and a vertical width of the quadrangular region. In a case where the text data 1221 is allocated to a region shaped in a polygon other than a quadrangle, an x-coordinate and a y-coordinate of each apex of the polygon may be used as the layout designation information 1222. The text layout description 1220 may further include (i) character size designation information designating a size of a character being to be displayed, (ii) character color designation information designating a color of a character being to be displayed, (iii) font designation information designating a font of a character being to be displayed, etc.

Note that the layout instruction file 1200 can include a plurality of different text layout descriptions 1220, and the television 100 can display a plurality of different text data on the screen which is arranged based on the layout instruction file 1200. If it is not necessary to display any text data on the screen, the layout instruction file 1200 may not include any text layout description 1220.

The notification indicator layout description 1230 is a description for depicting a notification indicator in the page screen which is arranged based on the layout instruction file 1200. The notification indicator layout description 1230 includes a notification indicator ID 1231, layout designation information 1232, and appearance designation information 1233.

The notification indicator ID 1231 is an ID uniquely assigned to the notification indicator. Each notification indicator corresponds to, in a one-to-one relationship, its respective quadrangular region in the screen which is arranged based on the layout instruction file 1200. The notification indicator is associated with the respective quadrangular region via the ID.

The layout designation information 1232 is information designating, in its corresponding quadrangular region, a position or the like in which the notification indicator is to be placed. For example, the layout designation information 1232 designates, as the position of the notification indicator 511 in the quadrangular region, an x-coordinate and a y-coordinate of an upper left apex of the corresponding quadrangular region.

The appearance designation information 1233 is information designating an appearance of the notification indicator. As described previously, the appearance of the notification indicator changes when its corresponding audio data is started to be reproduced. Then, the appearance of the notification indicator 511 is restored to its original appearance when the reproduction ends. In order to realize this, the appearance designation information 1233 designates two types of appearances for the notification indicator.

The notification indicator being to be depicted based on the notification indicator layout description 1230 is displayed so as to be associated with a corresponding content item (i.e., (i) the image file 1300 being to be depicted based on the image file layout description 1210 or (ii) the text data 1221 being to be depicted based on the text layout description 1220) displayed on the screen which is arranged based on the layout instruction file 1200. The notification indicator is used to display the content item emphatically.

The layout instruction file 1200 can include a plurality of different notification indicator layout descriptions 1230, and the television 100 can display a plurality of different notification indicators on the screen which is arranged based on the layout instruction file 1200. If it is not necessary to display any notification indicator on the screen, the layout instruction file 1200 may not include any notification indicator layout description 1230.

The event handler 1240 is a description for causing the television 100 to execute a process with respect to an event occurring while the screen being based on the layout instruction file 1200 is displayed. As a typical event, user's operation is assumed. However, not only this, the event handler 1240 can also describe a process with respect to an event other than user's operation, for example, a timer event. The event handler 1240 includes (i) event designation information 1241 designating an event being to be monitored and (ii) a command 1242 designating a process being to be executed in response to detection of the event designated by the event designation information 1241.

Upon detecting the event designated by the event designation information 1241 while displaying the screen being based on the layout instruction file 1200, the television 100 executes the designated process, according to the command 1242. If the layout instruction file 1200 is described with use of a language by which event handlers with respect to different events can be described as respective different functions, the name of a function of each event handler corresponds to the event designation information 1241.

Note that the layout instruction file 1200 can include a plurality of different event handlers 1240, and the television 100 can execute, in response to any of a plurality of different events, a processes with respect to the corresponding event. If it is not necessary to execute any process with respect to an event, the layout instruction file 1200 may not include any event handler 1240.

A suitable language for describing the above-described layout instruction file 1200 can be Extensible Markup Language (XML) such as SVG (Scalable Vector Graphics), SMIL (Synchronized Multimedia Integration Language), or XHTML (Extensible Hypertext Markup Language).

The following will describe, with reference to Figs. 7 and 8, concrete examples of the layout instruction file 1200 included in the page content data 1000, the layout instruction file 1200 defining the page screen.

Fig. 7 is a view schematically illustrating a first concrete example of the layout instruction file 1200 included in the page content data 1000.

Schematically, a layout instruction file 1200 shown in Fig. 7 provides a page screen 50 by depicting an image file 1300 (specifically, image data in a JPEG format) which is obtained by converting, into an image, the page screen 50 shown in (a) of Fig. 3. Namely, content items (i.e., articles 51 through 57 and an advertisement 58) being to be displayed on the page screen 50 are included in the image file 1300 as image information.

The layout instruction file 1200 shown in Fig. 7 includes (i) an image file layout description 1210 for depicting the image file 1300, which is obtained by converting the page screen 50 into the image, and (ii) a notification indicator layout description 1230 for depicting a notification indicator 511, which notifies that the article 51 is currently read aloud.

Namely, the notification indicator layout description 1230 includes layout designation information being set to a region of the page screen 50 in which region the article 51 is to be displayed. Therefore, the notification indicator 511 is placed just in the region for the article 51.

Here, the notification indicator layout descriptions 1230 are given respective notification indicator IDs, which are assigned correspondingly to the order in which the articles displayed on the page screen 50 are to be read aloud. In Fig. 7, only the article 51 has a corresponding audio data. Accordingly, the notification indicator layout description 1230 for the article 51 is given "sign1" as its notification indicator ID.

In a case where articles other than the article 51 also have corresponding audio data, the articles are of course given, as their respective notification indicator IDs, "sign2", "sign3", ... , correspondingly to the order in which the articles are to be read aloud.

The order in which the articles are to be read aloud is predetermined, and is described in, e.g., the article data 40 supplied from the article DB server 300.

Further, in a case where the order is not described in the article data 40 supplied from the article DB server 300, the order may be determined according to the layout in the page screen 50, for example, as follows: upper right in the page screen 50 → upper left in the page screen 50 → lower right in the page screen 50 → lower left in the page screen 50.

Typically, unless otherwise instructed by the user, audio data corresponding to the content of the respective articles are reproduced according to the reading order. Of course, based on an instruction given by the user, it is possible to skip or repeat reading a certain article.

Fig. 8 is a view schematically illustrating a second concrete example of the layout instruction file 1200 included in the page content data 1000.

Schematically, a layout instruction file 1200 shown in Fig. 8 provides a page screen 50 by individually depicting (i) text data expressing respective content items included in the page screen 50, i.e., respective articles 51 through 57, and (ii) image data expressing an advertisement 58.

The layout instruction file 1200 shown in Fig. 8 includes (i) a plurality of text layout descriptions 1220 for depicting the respective articles 51 through 57, (ii) an image file layout description 1210 for depicting an image file 1300 (specifically, image data in a JPEG format) which is obtained by converting the advertisement 58 into an image, and (iii) a notification indicator layout description 1230 for depicting a notification indicator 511, which notifies that the article 51 is currently read aloud.

The text layout descriptions 1220 for depicting the respective articles 51 through 57 include (i) text data expressing the respective articles 51 through 57 and (ii) layout designation information designating display regions in which the respective text data are to be displayed. Note that the notification indicator layout description 1230 is the same as that in the first concrete example. Therefore, explanations thereof are omitted here.

Next, the following will describe the read-aloud content data. The television 100 is configured so as to be capable of reproducing read-aloud content data 2000 having the below-described data configuration. The read-aloud content data to be reproduced by the television 100 is realized by storing, in the read-aloud content data 2000, data corresponding to voice reading the content of respective articles included in an electronic newspaper.

Fig. 9 is a view schematically illustrating a data configuration of the read-aloud content data 2000 that the television 100 can reproduce. As shown in Fig. 9, the read-aloud content data 2000 includes a reading-aloud control description file 2100, audio data 2200, and reproduction period information 2300.

The reading-aloud control description file 2100 is a file defining a process to be executed by the television 100 during reproduction of the read-aloud content data 2000. The audio data 2200 is a file including, in a predetermined format, audio data corresponding to voice reading the content of an article being to be read aloud by the television 100 during reproduction of the read-aloud content data 2000. The reproduction period information 2300 is information indicating a time period which is necessary for the television 100 to read aloud the audio data 2200.

Each piece of the read-aloud content data 2000 is associated with a corresponding one of the articles 51 through 57 on the page screen 50 in a one-to-one relationship. Of the articles 51 through 57, any one having corresponding audio data has read-aloud content data 2000 prepared therefor.

Next, the following will describe the reading-aloud control description file 2100 included in the read-aloud content data 2000.

Fig. 10 is a view schematically illustrating a typical example of a description in the reading-aloud control description file 2100. The reading-aloud control description file 2100 includes a listing of (i) command statements defining respective commands to be given to the television 100 and (ii) control statements controlling an order in which command statements are to be executed. Particularly, the reading-aloud control description file 2100 exemplified in Fig. 10 includes the following command statements and control statements listed in the following order:
(1) A command statement 2101 for instructing to reproduce the audio data 2200.
(2) A command statement 2102 for instructing to change, in sync with start of the reproduction of the audio data 2200, an appearance of a notification indicator which is placed in a region for an article corresponding to the read-aloud content data 2000.
(3) A control statement 2103 for determining, as a command statement to be executed next, (i) a command statement 2104 if a button "2" on the remote controller is pressed or (ii) a command statement 2105 if the button "2" on the remote controller is not pressed.
(4) A command statement 2104 for instructing to stop the reproduction of the audio data 2200 at a point when the button "2" on the remote controller is pressed.
(5) A command statement 2105 for instructing to stop the reproduction of the audio data 2200 at a point when the whole of the content of the audio data 2200 has been read aloud.

Here, the instruction of the command statement 2105 to stop the reproduction of the audio data 2200 may be given based on (i) elapse of a predetermined time period which is necessary for the television 100 to read aloud the audio data 2200 and which is indicated by the reproduction period information 2300 or (ii) an actual stop of the reproduction of the audio data 2200.
(6) A command statement 2106 for instructing to restore, in sync with the stop of the reproduction of the audio data 2200, the appearance of the notification indicator to its original appearance, which notification indicator is placed in the region for the article corresponding to the read-aloud content data 2000.

According to the reading-aloud control description file 2100 exemplified in Fig. 10, the television 100 operates as described below. The following will describe a method of how the television 100 displays content.

When the read-aloud content data 2000 is started to be reproduced, the television 100 starts reproducing the audio data 2200 according to the command statement 2101, which is the first statement in the reading-aloud control description file 2100.

Then, according to the command statement 2102, the television 100 changes the appearance of the notification indicator for the article corresponding to the audio data 2200.

If, e.g., the button "2" on the remote controller is pressed while the audio data 2200 is reproduced, the television 100 stops reproducing the audio data 2200, which is currently reproduced, according to the command statement 2 104.

Then, according to the command statement 2106, the television 100 restores the appearance of the notification indicator for the article corresponding to the audio data 2200 whose reproduction has been stopped. Namely, the television 100 restores the appearance of the notification indicator to the appearance that the notification indicator had before the reproduction.

On the other hand, if, e.g., the button "2" on the remote controller is not pressed while the audio data 2200 is reproduced, the television 100 stops reproducing the audio data 2200 at a point when the whole of the content of the audio data 2200 has been read aloud, according to the command statement 2105.

Then, according to the command statement 2106, the television 100 restores the appearance of the notification indicator for the article corresponding to the audio data 2200 whose reproduction is stopped. Namely, the television 100 restores the appearance of the notification indicator to the appearance that the notification indicator had before the reproduction.

In a case where there exist a plurality of articles each having corresponding audio data, the television 100 sequentially obtains read-aloud content data 2000 corresponding to the respective articles each having the corresponding audio data, and executes the above-described operation for each of the articles.

Further, regardless of whether or not reproduction of first audio data is completed, which first data is to be reproduced prior to second audio data, the television 100 may obtain, according to a reading order of the articles, read-aloud content data 2000 for an article corresponding to the second audio data.

### (C. Television)

The following will describe the television 100 for reproducing the content data 10.

Fig. 1 is a block diagram illustrating a configuration of a main part of the television 100. As shown in Fig. 1, the television 100 includes a communication section 101, a storage section 102, a display section 103, a remote controller signal receiving section 104, a reproduction section 105, and a control section 110.

The communication section 101 is means for performing data communication with another communication device connected to the network. Specifically, the communication section 101 transmits the content request 20 to the content generating server 200, and receives the content data 10 from the content generating server 200.

The storage section 102 is means for storing the content data 10 that the communication section 101 has obtained. For example, the storage section 102 is made of a storage device such as a flash memory or a hard disc drive. Note that the storage section 102 stores, in addition to the content data 10 that the communication section 101 has obtained, a control program being to be executed by the control section 110. The storage section 102 may be realized by an external storage device (e.g., a HDD recorder) connected to the television 100.

The display section 103 is means for outputting, in a visible manner, a screen which is arranged based on the page content data 1000. For example, the display section 103 is made of a display device such as an LCD (Liquid Crystal Display), a PDP (Plasma Display Panel), or a CRT (cathode-ray tube) based display. Note that, while no page content data 1000 is reproduced, the display section 103 is used to output received broadcasting content.

The remote controller signal receiving section 104 is means for receiving a remote controller signal transmitted by the remote controller 700. For example, the remote controller signal receiving section 104 is made of an infrared-ray receiving device which receives an infrared ray transmitted by the remote controller 700 and converts the infrared ray into an electric signal. The remote controller signal receiving section 104 transmits the received remote controller signal to the control section 110.

The reproduction section 105 is means for allowing the user to listen to the audio data 2200 included in the read-aloud content data 2000.

The control section 110 is means for controlling operation of each section included in the television 100. As shown in Fig. 1, the control section 110 includes, as internal blocks, an obtaining section (obtaining means) 111, a remote controller signal analyzing section 112, a process section (setting means) 113, and a setting section (display means, setting means) 114. The control section 110 is made of, e.g., an operation device such as a CPU (central processing unit). The operation device realizes a function of each internal block by executing the control program stored in the storage section 102.

The obtaining section 111 controls the communication section 101 so as to obtain the content data 10 from the content generating server 200. More specifically, upon receiving an instruction from the remote controller signal analyzing section 112 or the process section 113, the obtaining section 111 generates the content request 20 and transmits the generated content request 20 to the content generating server 200 via the communication section 101.

Further, upon receiving the content data 10 in response to the content request 20, the obtaining section 111 causes the storage section 102 to store the received content data 10.

The remote controller signal analyzing section 112 identifies, according to a remote controller signal that the remote controller signal receiving section 104 has received, the content of user's operation performed with respect to the remote controller 700. Then, the remote controller signal analyzing section 112 notifies the identified content to the obtaining section 111, the process section 113, and the setting section 114.

The process section 113 reads out the flow control description file 1100 from the page content data 1000 stored in the storage section 102. Then, the process section 113 gives the obtaining section 111 or the setting section 114 an instruction according to a command described in the flow control description file 1100. If the flow control description file 1100 includes a description of a branch to switch a command according to the user's operation, the process section 113 refers to the notification provided by the remote controller signal analyzing section 112 so as to determine a command being to be executed next.

For example, in response to a command to obtain certain page content data, the process section 113 instructs the obtaining section 111 to obtain the page content data. Meanwhile, in response to a command to display a screen being based on a certain layout instruction file 1200, the process section 113 instructs the setting section 114 to display a screen being based on the layout instruction file 1200.

Further, the process section 113 reads out the reading-aloud control description file 2100 from the read-aloud content data 2000 stored in the storage section 102, and gives the setting section 114 an instruction according to a command described in the reading-aloud control description file 2100. If the reading-aloud control description file 2100 includes a description of a branch to switch a command according to the user's operation, the process section 113 refers to the notification provided by the remote controller signal analyzing section 112 so as to determine a command being to be executed next.

For example, in response to a command to start reproduction of certain audio data, the process section 113 instructs the setting section 114 to obtain the audio data. Further, the process section 113 instructs the setting section 114 to change, in sync with start of reproduction of the certain audio data, an appearance of a notification indicator which is placed in a region for an article corresponding to the audio data.

In response to a command to stop reproduction of certain audio data which is currently reproduced, the process section 113 instructs the setting section 114 to stop the reproduction of the audio data. Further, the process section 113 instructs the setting section 114 to restore, in sync with the stop of the reproduction of the certain audio data, the appearance of a notification indicator to the appearance that the notification indicator had before the reproduction, the notification indicator being placed in a region for an article corresponding to the audio data.

Upon receiving, from the process section 113, an instruction to display a screen being based on the layout instruction file 1200, the setting section 1 14 reads out the layout instruction file 1200 from the storage section 102, and generates the page screen 50 (see (a) of Fig. 3) based on the layout instruction file 1200. In this process, in a case where the layout instruction file 1200 is the one referring to the image file 1300, the setting section 114 generates the page screen 50 by (i) reading out, from the storage section 102, the image file 1300 which is referred to, and (ii) causing the image file 1300 to be placed in a position defined by the layout instruction file 1200. The setting section 114 causes the display section 103 to display the generated page screen 50. Further, in a case where the layout instruction file 1200 includes the event handler 1240, the setting section 114 refers to the notification provided by the remote controller signal analyzing section 112 so as to perform a process with respect to the user's operation, e.g., a process for rewriting the page screen 50.

Furthermore, upon receiving, from the process section 113, an instruction to start reproduction of the audio data 2200, the setting section 114 reads out the audio data 2200 from the storage section 102, and causes the reproduction section 105 to reproduce the audio data 2200. Moreover, upon receiving, from the process section 113, an instruction to change an appearance of the notification indicator which is placed in the region for the article corresponding to the audio data 2200, the setting section 114 changes, on the page screen 50 displayed on the display section 103, the appearance of the target notification indicator.

In addition, upon receiving, from the process section 113, an instruction to stop the reproduction of the audio data 2200, the setting section 114 causes the reproduction section 105 to stop the reproduction of the audio data 2200. Even if no instruction to stop the reproduction is given by the process section 113, the setting section 114 may read out the reproduction period information 2300 from the storage section 102. Then, the setting section 114 may cause the reproduction section 105 to stop the reproduction of the audio data 2200 based on elapse of the reproduction period of the audio data 2200, which reproduction period is indicated by the reproduction period information 2300.

Furthermore, upon receiving, from the process section 113, an instruction to restore the appearance of the notification indicator which is placed in the region for the article corresponding to the audio data 2200, the setting section 114 restores, on the page screen 50 displayed on the display section 103, the appearance of the target notification indicator to the appearance that the notification indicator had before the start of the reproduction of the audio data 2200.

Note that, according to the television 100 of the present embodiment, even in a case where a plurality of articles displayed on the page screen 50 have audio data corresponding to voice reading the respective articles, it is possible to sequentially obtain read-aloud content of the respective articles having such the audio data, and to appropriately indicate, to the user, the read-aloud content thus obtained. This will be described below:

Fig. 11 is a flow chart illustrating a procedure in which the television 100 of the present embodiment obtains the content data 10.

As shown in Fig. 11, the obtaining section 111 generates the content request 20 for requesting the page content data 1000, and transmits the generated content request 20 to the content generating server 200 via the communication section 101 (Step S101).

The communication section 101 receives the page content data 1000 from the content generating server 200 which has received the content request 20. Then, the obtaining section 111 obtains the page content data 1000 that the communication section 101 has received, and causes the page content data 1000 to be stored in the storage section 102 (Step S102).

The process section 113 reads out the flow control description file 1100 from the page content data 1000 stored in the storage section 102, and instructs the setting section 114 to display, according to a command described in the flow control description file 1100, a screen being based on the layout instruction file 1200. The setting section 114, upon receiving the instruction from the process section 113, reads out the layout instruction file 1200 from the storage section 102, and generates the page screen 50 based on the layout instruction file 1200 (Step S103).

According to a command described in the flow control description file 1100, the process section 113 instructs the obtaining section 111 to obtain read-aloud content data (YES in Step S104).

The obtaining section 111 generates a content request 20 for requesting the read-aloud content data 2000, and transmits the generated content request 20 to the content generating server 200 via the communication section 101 (Step S105).

The communication section 101 receives the read-aloud content data 2000 from the content generating server 200 which has received the content request 20. Then, the obtaining section 111 obtains the read-aloud content data 2000 that the communication section 101 has received, and causes the read-aloud content data 2000 to be stored in the storage section 102 (Step S106).

In a case where, of articles on the page screen 50 generated in Step S103, a plurality of articles have corresponding audio data, the layout instruction file 1200 includes a plurality of notification indicator layout descriptions 1230. In this case, a process from Step S104 to Step S106 is repeatedly performed, until all instructions for obtaining respective read-aloud content data are executed.

Further, these instructions to obtain the respective read-aloud content data are consecutively executed, regardless of whether or not an instruction is given by the user, etc. With this, the audio data 2200 corresponding to the respective articles on the page screen 50 can be consecutively reproduced without interruption.

On the other hand, if the articles on the page screen 50 generated in Step S103 includes no article having corresponding audio data, or if all of the instructions for obtaining the respective read-aloud content data have been already executed (NO in Step 104), a process for obtaining the content data 10 ends, which process is performed by the television 100 of the present embodiment.

Thus, even in the case where the plurality of articles displayed on the page screen 50 have audio data corresponding voice reading the respective article, the read-aloud content data corresponding to the respective articles each having such the audio data are sequentially obtained.

Here, in Step S106, the obtaining of the read-aloud content data 2000 may be executed before the page screen 50 is displayed in Step S103. Consequently, after the page screen 50 is displayed, it is possible to start, without interruption, reproduction of the audio data 2200 corresponding to the article on the page screen 50.

### (D. Content Generating Server)

The following will describe the content generating server 200.

Fig. 12 is a block diagram illustrating a configuration of a main part of the content generating server 200. As shown in Fig. 12, the content generating server 200 includes a communication section 201, a storage section 202, and a control section 210.

The communication section 201 is means for performing data communication with another communication device. Specifically, the communication section 201 receives the content request 20 from the television 100, and transmits the content data 10 to the television 100. Further, the communication section 201 receives the article data 40 from the article DB server 300.

The storage section 202 is made of a storage device such as a hard disc drive, and includes a content data accumulation section 202a for storing the content data 10, a layout data accumulation section 202b for storing the layout data 30, and an article data accumulation section 202c for storing the article data 40. Note that the storage section 202 may include, in addition to the above sections, a control program storage section (not illustrated) for storing a control program which is to be executed by the control section 210.

The control section 210 is means for controlling operation of each section included in the content generating server 200. The control section 210 includes internal blocks such as a process section 211, a layout data obtaining section 212, a combining section 213, a measurement section 214, an article data obtaining section 215, and a totalizing section 216. The control section 210 is made of, e.g., an operation device such as a CPU (central processing unit). The operation device realizes a function of each internal block by executing the control program stored in the storage section 202.

The process section 211 analyzes the content request 20 that the communication section 201 has received, and controls the communication section 201 so as to transmit, to the television 100, the content data 10 for the received content request 20.

More specifically, when the communication section 201 receives the content request 20, the process section 211 determines whether or not the content data 10 for the received content request 20 is stored in the content data accumulation section 202a. If the content data 10 for the content request 20 is already stored in the content data accumulation section 202a, the process section 211 reads out the content data 10 from the content data accumulation section 202a, and transmits the read content data 10 to the television 100 via the communication section 201.

On the other hand, if the content data 10 for the content request 20 is not stored in the content data accumulation section 202a (including a case where the content request 20 is the one requesting latest content data 10), the process section 211 instructs the layout data obtaining section 212 to obtain, from the layout data accumulation section 202b, the layout data 30 for the content request 20.

The layout data obtaining section 212 reads out, from the layout data accumulation section 202b, the layout data 30 for the content request 20, and supplies the read layout data 30 to the combining section 213. Note that, if the layout data 30 for the content request 20 is not stored in the layout data accumulation section 202b, the layout data obtaining section 212 may obtain the layout data 30 from an external database which manages layout data, and may cause the obtained layout data 30 to be stored in the layout data accumulation section 202b.

The article data obtaining section 215 obtains, from the article DB server 300 via the communication section 201, the article data 40 being to be combined to the content data 10. The article data obtaining section 215 causes the obtained article data 40 to be stored in the article data accumulation section 202c.

The combining section 213 receives the layout data 30 from the layout data obtaining section 212, and generates the content data 10 according to the received layout data 30. The combining section 213 causes the generated content data 10 to be stored in the content data accumulation section 202a.

The measurement section 214 receives the article data 40 from the article data obtaining section 215. Then, by using text data which are included in the received article data 40 and express respective articles, the measurement section 214 measures a time period necessary for each article to be read aloud by voice. The measurement section 214 outputs the measurement result to the combining section 213. Then, when the read-aloud content data 2000 of the content data 10 is generated, the combining section 213 uses the measurement result, which is provided by the measurement section 214, so as to set the reproduction period information 2300 in the read-aloud content data 2000.

Here, there may be a case where a plurality of articles displayed on the page screen 50 include both of (i) an article having audio data corresponding to voice reading the content of the article and (ii) an article not having such audio data. In such a case, for the article for which generation of audio data 2200 is not necessary, the measurement section 214 may estimate a time period which may be necessary for the user to read the article, based on a volume (e.g., the number of characters and/or the number of photos) of the article. Then, the measurement section 214 may output the estimated time period to the combining section 213. For example, such the estimation may be performed on the assumption that (i) it takes 0.5 seconds to read one character in the article and (ii) it takes 5 seconds to read one image in the article. In a case of an advertisement, the estimation may be performed on the assumption that it takes 30 seconds to read one advertisement.

According to the above configuration, in the case where the plurality of articles displayed on the page screen 50 include both of (i) the article having audio data corresponding to voice reading the content of the article and (ii) the article not having such audio data, the above estimated time period can be regarded as a time period necessary for the user to read the article not having audio data.

Specifically, assume that the measurement section 214 receives, from the article data obtaining section 215, a plurality of article data 40 including article data 40 for which generation of audio data 2200 is necessary. In this case, for each of the article data 40 for which generation of audio data 2200 is necessary, the measurement section 214 first measures a time period necessary to read aloud the article by voice, with use of text data being included in the article data 40 and expressing the article.

On the other hand, for an article 40 for which generation of audio data 2200 is not necessary, the measurement section 214 estimates, based on a volume of the article 40, a time period which may be necessary for the user to read the article.

Then, for the article 40 for which generation of the audio data 2200 is necessary, the measurement section 214 outputs the measured time period to the totalizing section 216. Further, for the article 40 for which generation of the audio data 2200 is not necessary, the measurement section 214 outputs the estimated time period to the totalizing section 216.

The totalizing section 216 totalizes the measured time period and the estimated time period, both of which are thus supplied from the measurement section 214. Then, the totalizing section 216 outputs the result of the totalization to the combining section 213.

Of course, such the totalization may be performed by the measurement section 214, and the totalizing section 216 may be omitted. Alternatively, in a case where the measurement section 214 receives a plurality of article data 40 from the article data obtaining section 215, the measurement section 214 may output the received article data 40 to the totalizing section 216 without performing any process thereon, and the totalizing section 216 may calculate the measurement time period and the estimated time period and totalize these time periods.

Thus, as a time period taken for the user to finish reading all articles on one page screen 50, such a total time period is used which is obtained by totalizing (i) a time period for an article having audio data being to be read aloud, which time period is indicated by the reproduction period information 2300, and (ii) an estimated time period for an article having no audio data being to be read aloud. Further, after the total time period has elapsed, the page screen 50 is switched to another. With this configuration, the user can read all of the articles on the page screen 50 adequately.

### (Additional Statements)

The present invention is not limited to the description of the embodiments above, but may be altered by a skilled person within the scope of the claims. An embodiment based on a proper combination of technical means disclosed in different embodiments is encompassed in the technical scope of the present invention.

Lastly, each block of the television 100, particularly the control section 110 may be realized by way of hardware or software as executed by a CPU as follows:

The television 100 includes a CPU (central processing unit) and memory devices (memory media). The CPU (central processing unit) executes instructions in control programs realizing the functions. The memory devices include a ROM (read only memory) which contains programs, a RAM (random access memory) to which the programs are loaded, and a memory containing the programs and various data. The objective of the present invention can also be achieved by mounting to the television 100 a computer-readable storage medium containing control program code (executable program, intermediate code program, or source program) for the television 100, which is software realizing the aforementioned functions, in order for the computer (or CPU, MPU) to retrieve and execute the program code contained in the storage medium.

The storage medium may be, for example, a tape, such as a magnetic tape or a cassette tape; a magnetic disk, such as a floppy (Registered Trademark) disk or a hard disk, or an optical disk, such as CD-ROM/MO/MD/DVD/CD-R; a card, such as an IC card (memory card) or an optical card; or a semiconductor memory, such as a mask ROM/EPROM/EEPROM/flash ROM.

The television 100 may be arranged to be connectable to a communications network so that the program code may be delivered over the communications network. The communications network is not limited in any particular manner, and may be, for example, the Internet, an intranet, extranet, LAN, ISDN, VAN, CATV communications network, virtual dedicated network (virtual private network), telephone line network, mobile communications network, or satellite communications network. The transfer medium which makes up the communications network is not limited in any particular manner, and may be, for example, wired line, such as IEEE 1394, USB, electric power line, cable TV line, telephone line, or ADSL line; or wireless, such as infrared radiation (IrDA, remote control), Bluetooth (Registered Trademark), 802.11 wireless, HDR, mobile telephone network, satellite line, or terrestrial digital network. The present invention encompasses a computer data signal which is embedded in a carrier wave and in which the program code is embodied electronically.

Further, each block of the content generating server 200, particularly the control section 210 may also be realized by way of hardware or software as executed by a CPU, as well as the television 100.

As described above, a content display device of the present invention is a content display device capable of (i) displaying a plurality of content items in a single screen and (ii) sequentially reading aloud by voice text strings relating to the respective plurality of content items, including: display means for causing the plurality of content items to be displayed in the single screen; and setting means for setting, in order to notify a user of a content item, among the plurality of content items, which has a text string relating to the content item and being currently read aloud, the screen displayed by the display means so that the screen has a display condition in which the content item which has the text string relating to the content item and being currently read aloud is distinguishable from a content item, among the plurality of content items, which is not the content item which has the text string relating to the content item and being currently read aloud.

According to the above content display device, among the plurality of content items displayed on the screen, a content item having a text string relating to the content item is notified to the user while the text string of the content item is read aloud, the notification being performed in such a manner that the content item is distinguishable from the other content item(s). This allows the user to easily identify the content item which is currently read aloud. Thus, it is possible to reliably provide the user with data corresponding to voice reading an article.

It is preferable that the display means causes a content item, among the plurality of content items, which has a text string relating to the content item and being able to be read aloud to be displayed in such a manner that the content item which has the text string relating to the content item and being able to be read aloud is associated with a notification indicator, the notification indicator indicating that the content item which has the text string relating to the content item and being able to be read aloud is able to be read aloud; and the setting means causes, in order to distinguishably notify the user that the content item which has the text string relating to the content item and being able to be read aloud is currently read aloud, a display condition of the notification indicator to be changed according to whether or not the content item which has the text string relating to the content item and being able to be read aloud is currently read aloud.

According to this configuration, while viewing the screen, the user can identify the content item which is currently read aloud. Thus, while an article is read aloud, this configuration can reliably notify the user that the article is currently read aloud.

It is preferable that the setting means causes, in order to distinguishably notify the user that a content item, among the plurality of content items, which has a text string relating to the content item and being able to be read aloud is currently read aloud, a display condition of a region of the screen in which region the content item which has the text string relating to the content item and being able to be read aloud is displayed to be changed according to whether or not the content item which has the text string relating to the content item and being able to be read aloud is currently read aloud.

According to this configuration, while viewing the screen, the user can identify the content item which is currently read aloud. Thus, while an article is read aloud, this configuration can reliably notify the user that the article is currently read aloud.

It is preferable that the content display device of the present invention further includes obtaining means for obtaining audio data corresponding to voice reading a text string relating to a content item, wherein: among the plurality of content items, content items each of which has a text string relating to the content item and being able to be read aloud are read aloud in a predetermined order; and regardless of whether or not a first content item being to be read aloud prior to a second content item is finished being read aloud, the obtaining means obtains audio data of the second content item according to the predetermined order, the first and second content items being included in the content items each of which has the text string relating to the content item and being able to be read aloud.

According to this configuration, at a point when reading-aloud of each content item ends, audio data corresponding to a next content item which is to be read aloud following said each content item has been already obtained. This makes is possible to reliably provide, without interruption, the user with content items being read aloud.

It is preferable that the display means causes a plurality of screens to be displayed sequentially, and the display means switches one screen to another screen after elapse of a total time period obtained by totalizing time periods necessary to read aloud, among content items displayed on the one screen, respective content items each of which has a text string relating to the content item and being able to be read aloud.

According to this configuration, after reading-aloud of all content items on one screen ends, a next screen is shown to the user. This makes it possible to reliably provide, without interruption, the user with content items being read aloud.

Further, the above content display device may be realized by a computer. In this case, the present invention encompass: a program for causing a computer to operate as each means described above so as to realize the content display device by the computer; and a computer readable storage medium storing the program.

A method of the present invention for displaying content is a method for displaying content, said method being capable of (i) displaying a plurality of content items in a single screen and (ii) sequentially reading aloud by voice text strings relating to the respective plurality of content items, said method including the steps of: (i) causing the plurality of content items to be displayed in the single screen; and (ii) setting, in order to notify a user of a content item, among the plurality of content items, which has a text string relating to the content item and being currently read aloud, the screen displayed in the step (i) so that the screen has a display condition in which the content item which has the text string relating to the content item and being currently read aloud is distinguishable from a content item, among the plurality of content items, which is not the content item which has the text string relating to the content item and being currently read aloud.

According to the above content display device, among the plurality of content items displayed on the screen, a content item having a text string relating to the content item is notified to the user while the text string of the content item is read aloud, the notification being performed in such a manner that the content item is distinguishable from the other content item(s). This allows the user to easily identify the content item which is currently read aloud. Thus, it is possible to reliably provide the user with data corresponding to voice reading an article.

The above content display device may be realized by a computer. In this case, the present invention also encompasses: a program for causing a computer to operate each means described above so as to realize the content display device by the computer; and a computer readable storage medium storing the program.

A method of the present invention for displaying content is a method for displaying content, said method being capable of (i) displaying a plurality of content items in a single screen and (ii) sequentially reading aloud by voice text strings relating to the respective plurality of content items, said method including the steps of: (i) causing the plurality of content items to be displayed in the single screen; and (ii) setting, in order to notify a user of a content item, among the plurality of content items, which has a text string relating to the content item and being currently read aloud, the screen displayed in the step (i) so that the screen has a display condition in which the content item which has the text string relating to the content item and being currently read aloud is distinguishable from a content item, among the plurality of content items, which is not the content item which has the text string relating to the content item and being currently read aloud.

According to the above method for displaying content, among the plurality of content items displayed on the screen, a content item having a text string relating to the content item is notified to the user while the text string of the content item is read aloud, the notification being performed in such a manner that the content item is distinguishable from the other content item(s). This allows the user to easily identify the content item which is currently read aloud. Thus, it is possible to reliably provide the user with data corresponding to voice reading an article.

### Industrial Applicability

The present invention is suitably applicable to content display devices for displaying content, particularly to content display devices each provided with a large display, for example, television receivers.

Reference Signs List
- 1: Electronic newspaper distribution system (content data distribution system)
- 100: Television (content display device)
- 101: Communication section
- 102: Storage section
- 103: Display section
- 104: Remote controller signal receiving section
- 110: Control section
- 111: Obtaining section (obtaining means)
- 112: Remote controller signal analyzing section
- 113: Process section (display means)
- 114: Setting section (display means, setting means)
- 200: Content generating server (content data providing device)
- 201: Communication section
- 202: Storage section
- 202a: Content data accumulation section
- 202b: Layout data accumulation section
- 202c: Article data accumulation section
- 210: Control section
- 211: Process section
- 212: Layout data obtaining section
- 213: Combining section
- 214: Measurement section
- 215: Article data obtaining section
- 216: Totalizing section
- 300: Article DB server
- 400: Internet
- 500: Dedicated line
- 600: Home network
- 601: HDD recorder
- 602: Printer
- 603: Mobile phone
- 604: Electronic paper
- 700: Remote controller
- 1000: Page content data
- 1100: Flow control description file
- 1200: Layout instruction file
- 1300: Image file
- 2000: Read-aloud content data
- 2100: Reading-aloud control description file
- 2200: Audio data
- 2300: Reproduction period information
- 10: Content data
- 20: Content Request
- 30: Layout data
- 40: Article data

## Claims

1. A content display device capable of (i) displaying a plurality of content items in a single screen and (ii) sequentially reading aloud by voice text strings relating to the respective plurality of content items, comprising:
display means for causing the plurality of content items to be displayed in the single screen; and
setting means for setting, in order to notify a user of a content item, among the plurality of content items, which has a text string relating to the content item and being currently read aloud, the screen displayed by the display means so that the screen has a display condition in which the content item which has the text string relating to the content item and being currently read aloud is distinguishable from a content item, among the plurality of content items, which is not the content item which has the text string relating to the content item and being currently read aloud.

2. The content display device as set forth in claim 1, wherein:
the display means causes a content item, among the plurality of content items, which has a text string relating to the content item and being able to be read aloud to be displayed in such a manner that the content item which has the text string relating to the content item and being able to be read aloud is associated with a notification indicator, the notification indicator indicating that the content item which has the text string relating to the content item and being able to be read aloud is able to be read aloud; and
the setting means causes, in order to distinguishably notify the user that the content item which has the text string relating to the content item and being able to be read aloud is currently read aloud, a display condition of the notification indicator to be changed according to whether or not the content item which has the text string relating to the content item and being able to be read aloud is currently read aloud.

3. The content display device as set forth in claim 1, wherein:
the setting means causes, in order to distinguishably notify the user that a content item, among the plurality of content items, which has a text string relating to the content item and being able to be read aloud is currently read aloud, a display condition of a region of the screen in which region the content item which has the text string relating to the content item and being able to be read aloud is displayed to be changed according to whether or not the content item which has the text string relating to the content item and being able to be read aloud is currently read aloud.

4. The content display device as set forth in any one of claims 1 through 3, further comprising:
obtaining means for obtaining audio data corresponding to voice reading a text string relating to a content item, wherein:
among the plurality of content items, content items each of which has a text string relating to the content item and being able to be read aloud are read aloud in a predetermined order; and
regardless of whether or not a first content item being to be read aloud prior to a second content item is finished being read aloud, the obtaining means obtains audio data of the second content item according to the predetermined order, the first and second content items being included in the content items each of which has the text string relating to the content item and being able to be read aloud.

5. The content display device as set forth in any one of claims 1 through 4, wherein:
the display means causes a plurality of screens to be displayed sequentially, and the display means switches one screen to another screen after elapse of a total time period obtained by totalizing time periods necessary to read aloud, among content items displayed on the one screen, respective content items each of which has a text string relating to the content item and being able to be read aloud.

6. A method for displaying content, said method being capable of (i) displaying a plurality of content items in a single screen and (ii) sequentially reading aloud by voice text strings relating to the respective plurality of content items, said method comprising the steps of:
(i) causing the plurality of content items to be displayed in the single screen; and
(ii) setting, in order to notify a user of a content item, among the plurality of content items, which has a text string relating to the content item and being currently read aloud, the screen displayed in the step (i) so that the screen has a display condition in which the content item which has the text string relating to the content item and being currently read aloud is distinguishable from a content item, among the plurality of content items, which is not the content item which has the text string relating to the content item and being currently read aloud.

7. A program for causing a computer to operate as a content display device as set forth in any one of claims 1 through 5,
the program causing the computer to operate as each means included in the content display device.

8. A computer readable storage medium storing a program as set forth in claim 7.
